# EUROPÄISCHE PATENTSCHRIFT

(11) **EP 3 012 501 B1**
(45) Veröffentlichungstag und Bekanntmachung des Hinweises auf die Patenterteilung: **28.09.2016**
(21) Anmeldenummer: 14190347.6
(22) Anmeldetag: 24.10.2014
(51) Int. Cl.: F16L 5/02, E04G 15/06, H02G 3/22

(54) **DURCHFÜHRUNG ZUM EINBAU IN EIN WAND- ODER BODENELEMENT**
FEED-THROUGH FOR INSTALLATION IN A WALL OR FLOOR ELEMENT
PASSAGE DESTINÉ À L'INTÉGRATION DANS UN ÉLÉMENT DE PAROI OU DE SOL

(43) Veröffentlichungstag der Anmeldung: 27.04.2016
(73) Patentinhaber: Hauff-Technik GmbH & Co. KG, 89568 Hermaringen (DE)
(72) Erfinder: Kurz, Ralf, 89537 Giengen (DE)
(74) Vertreter: König Szynka Tilmann von Renesse Patentanwälte Partnerschaft mbB

(56) Entgegenhaltungen:
- EP-A1- 2 728 232
- WO-A1-03/005521
- JP-A- H09 280 426

## Beschreibung

Die vorliegende Erfindung betrifft eine Durchführung zum Einbau in ein Wand- oder Bodenelement, welche ein Rohrelement und einen dieses verschließenden Verschluss aufweist.

Der Einbau erfolgt in der Regel durch Vergießen mit Beton, die Durchführung wird also bspw. in einer Schalung montiert und dann beim Gießen des Wand- oder Bodenelements von dem Beton umschlossen. Nach dessen Aushärten und dem Entfernen der Schalungselemente hält die Durchführung eine Durchgangsöffnung zwischen den entgegengesetzten Seitenflächen des Wand- oder Bodenelements frei. Es kann dann bspw. ein Kabel von einer Seite eines entsprechenden Wand- oder Bodenelements durch die Durchführung hindurch zur entgegengesetzten Seite geführt werden.

Eine Durchführung gemäß dem Oberbegriff des Anspruchs 1 ist aus der EP 2728232 A bekannt.

Der vorliegenden Erfindung liegt die Aufgabe zugrunde, eine vorteilhafte Durchführung anzugeben.

Erfindungsgemäß löst diese Aufgabe eine Durchführung zum Einbau in ein Wand- oder Bodenelement, mit einem Rohrelement, das dazu ausgelegt ist, eine Durchgangsöffnung zwischen zwei entgegengesetzten Seiten des Wand- oder Bodenelements mit zu begrenzen, durch welche Durchgangsöffnung eine Leitung in einer Längsrichtung des Rohrelements durch das Wand- oder Bodenelement hindurchführbar ist, und einem das Rohrelement hinsichtlich der Längsrichtung verschließenden Verschluss, der aus dem Rohrelement entfernbar ist, wobei der Verschluss jedenfalls bereichsweise aus einem zumindest transluzenten Material gebildet ist, sodass vor dem Entfernen des Verschlusses an einer Seite des Verschlusses anstehendes Wasser an der entgegengesetzten Seite des Verschlusses visuell erkennbar ist.

Bevorzugte Ausführungsformen finden sich in den abhängigen Ansprüchen und der gesamten Offenbarung, wobei in der Darstellung nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen.

Der das Rohrelement verschließende Verschluss dichtet dieses in Bezug auf die Längsrichtung, verhindert also im Rahmen des technisch Möglichen einen Durchtritt von Wasser. Dieser Verschluss ist nun zumindest in einem Bereich aus einem Material gebildet, das mindestens transluzent ist, also zumindest teilweise lichtdurchlässig. "Zumindest teilweise lichtdurchlässig" kann bspw. einen Transmissionsgrad von mindestens 30 %, vorzugsweise mindestens 50 %, weiter bevorzugt mindestens 70 %, besonders bevorzugt mindestens 80 %, meinen; technisch bedingt können mögliche Obergrenzen bspw. bei höchstens 95 % bzw. 90 % liegen.

Vorzugweise ist das zumindest transluzente Material transparent, ist es also bild-/blickdurchlässig. Steht an einer Seite des Verschlusses Wasser an, ist dies an der entgegengesetzten Seite visuell, auf diese entgegengesetzte Seite blickend erkennbar. Nimmt bspw. ein Monteur nach der Herstellung des Wand- oder Bodenelements den Verschluss aus dem Rohrelement, um eine Leitung hindurchzuführen, kann er durch eine Sichtkontrolle prüfen, ob an dem Verschluss Wasser ansteht.

Beim Entfernen des Verschlusses steht der Monteur gewöhnlich im Inneren eines Gebäudes bzw. einer vergleichbaren Einrichtung, wie bspw. einer Trafostation, und es kann sich das Rohrelement der Durchführung mit Wasser gefüllt haben, etwa mit Grund- oder Regenwasser. Entsprechendes, dann am Verschluss anstehendes Wasser ist in der Regel verschmutzt, also nicht klar, sondern eingetrübt. Auch im Falle der Transluzenz kann das anstehende Wasser deshalb optisch festgestellt werden.

Vorzugsweise ist das zumindest transluzente Material transparent, ist der Verschluss also zumindest bereichsweise bild-/blickdurchlässig. In anderen Worten ist der Verschluss dann zumindest bereichsweise durchsichtig. An dem Verschluss anstehendes Wasser kann dann besonders gut und zuverlässig festgestellt werden. Es sind dann zum Beispiel auch unterschiedliche Pegelstände feststellbar, ist also über den transparenten Bereich der Wasser-/Luft-Übergang sichtbar.

Der Bereich aus dem zumindest transluzenten, vorzugsweise transparenten, Material erstreckt sich in bevorzugter Ausgestaltung senkrecht zur Längsrichtung über mindestens ein Drittel, vorzugsweise mindestens zwei Drittel, eines senkrecht zur Längsrichtung genommenen Innendurchmessers des Rohrelements. Im Allgemeinen meint "Durchmesser" dabei einen Mittelwert aus kleinster und größter Erstreckung (senkrecht zur Längsrichtung), der im bevorzugten Fall einer Kreisform dem Kreisdurchmesser entspricht. Betrachtet wird der Durchmesser in einer zur Längsrichtung senkrechten Schnittebene. Soweit sich der Durchmesser über die Längsrichtung ändert, wird ein Mittelwert des Bereichs zugrunde gelegt, in dem der Verschluss angeordnet ist.

Das "jedenfalls bereichsweise" vorgesehene, zumindest transluzente Material kann im Allgemeinen auch nur ein Sichtfenster im übrigen Verschluss darstellen, etwa ein eingesetztes oder im Falle eines Mehr-Komponenten-Spritzgussteils eingespritztes bzw. umspritztes Sichtfenster. Vorzugsweise ist der Verschluss jedoch im Gesamten aus dem zumindest transluzenten, vorzugweise transparenten, Material geformt. Der Verschluss ist vorzugsweise ein monolithisches Teil, wobei "monolithisch" durchgehend ohne Materialgrenze zu einem anderen Material oder einem Materialabschnitt anderer Herstellungsgeschichte meint. Der Verschluss ist vorzugsweise ein Formteil, und zwar besonders bevorzugt ein Ein-Kompononenten-Spritzgussteil.

In bevorzugter Ausgestaltung ist das zumindest transluzente Material Acrylglas oder Polykarbonat, vorzugsweise jeweils frei von Farbstoffen.

Der Verschluss ist vorzugsweise zerstörungsfrei aus dem Rohr entfernbar, also ohne Materialzerstörung. Letztere wäre bspw. im Falle eines im Allgemeinen auch denkbaren, mit dem Rohrelement einstückigen Verschlusses notwendig, wenn der Verschluss bspw. als Trennwand ausgebildet ist, die dann z. B. mit einem Werkzeug ausgeschlagen wird. Eine solche Trennwand kann bspw. auch über einen als Sollbruchstelle vorgesehenen Bereich verringerter Materialdicke mit dem Rohrelement verbunden sein. Im Allgemeinen können im Falle einer solchen Einstückigkeit Rohrelement und Verschluss auch aus demselben Material, vorzugsweise monolithisch, vorgesehen sein; bevorzugt sind jedoch unterschiedliche Materialien und handelt es sich dann um ein Mehr-Komponenten-Spritzgussteil.

Der in bevorzugter Ausgestaltung indes zerstörungsfrei aus dem Rohrelement entfernbare Verschluss ist weiter bevorzugt über einen Drehmechanismus in dem Rohrelement gehalten, besonders bevorzugt eine Bajonettarretierung. Es kann dann bspw. nach dem Einbau der Durchführung die Bajonettarretierung durch Drehen des Verschlusses, etwa auch ein kombiniertes Andrücken und Drehen, gelöst und der Verschluss aus dem Rohrelement genommen werden.

Im Allgemeinen muss der Verschluss die Durchgangsöffnung in dem Rohrelement senkrecht zur Längsrichtung für sich nicht vollständig ausfüllen, sondern kann er bspw. auch in einer Durchlassöffnung eines Systemdeckels (siehe unten) angeordnet sein. Generell ist das Rohrelement in Anwesenheit des Verschlusses in Bezug auf die Längsrichtung gedichtet; wird er entfernt (und nicht ersetzt) ist insoweit keine Dichtung mehr gegeben. Generell kann der Verschluss auch ausschließlich endseitig an das Rohrelement anschließend vorgesehen sein, bevorzugt ist jedoch ein zumindest mit einem Abschnitt, besonders bevorzugt ein im Gesamten in dem Rohrelement angeordneter Verschluss (jeweils bezogen auf die Längsrichtung).

Bei einer bevorzugten Ausführungsform reicht der Verschluss vollständig umlaufend (bezogen auf einen Umlauf um eine zur Längsrichtung parallele, das Rohrelement mittig durchsetzende Achse) an eine Innenwand des Rohrelements. Ein bevorzugt zerstörungsfrei aus dem Rohrelement entfernbarer Verschluss liegt dann also vollständig umlaufend an der Innenwand des Rohrelements an, jedenfalls mit einem Abschnitt, vorzugsweise im Gesamten.

Im Allgemeinen kann auch der Verschluss seinerseits ein Systemdeckel sein, also mindestens eine Durchlassöffnung aufweisen, vorzugsweise mindestens zwei bzw. mindestens drei Durchlassöffnungen. Eine solche Durchlassöffnung in dem Systemdeckel kann im Falle einer montierten Durchführung dann entweder bereits mit einer Leitung belegt oder (noch) mit einem Blindverschluss versehen sein. Eine solche jedenfalls zeitweilig mit einem Blindverschluss versehene Durchlassöffnung des Systemdeckels kann dann auch erst nachträglich mit einer Leitung belegt werden. Ist der Systemdeckel dabei zumindest transluzent, vorzugsweise transparent, kann vor einer Nachbelegung geprüft werden, ob Wasser ansteht.

Wenngleich der Verschluss also im Allgemeinen auch seinerseits eine Durchlassöffnung aufweisen kann, ist ein das Rohrelement senkrecht zur Längsrichtung vollständig und unterbrechungsfrei ausfüllender Verschluss bevorzugt (der also von Durchlassöffnungen frei ist). Besonders bevorzugt ist der Verschluss ein zu dem Rohrelement mehrstückiges, reversibel einsetz- und wieder herausnehmbares Teil, welches das Rohrelement (senkrecht zur Längsrichtung) vollständig und unterbrechungsfrei ausfüllt, also vollständig umlaufend an eine Rohrelementinnenwand grenzt und von Durchlassöffnungen frei ist.

Bei dem in den Figuren gezeigten Verschluss sind sechs kreisförmige Ausnehmungen zu erkennen. Dabei handelt es sich nicht um Durchlassöffnungen (eine Durchlassöffnung verbindet eine Seite des Verschlusses druckfluidisch mit der anderen), sondern um den Verschluss nicht vollständig durchsetzende Eingriffe, in welche der Monteur bspw. mit der Hand greifen oder in denen er ein Werkzeug ansetzen kann. Auch die in den Figuren gezeigte, sternförmige Ausnehmung dient einem solchen Zweck, der Monteur kann bspw. nach Art eines Schlitzschraubendrehers eine Kelle ansetzen, um den Verschluss zu drehen. In allgemeinen Worten weist der Verschluss vorzugsweise an einer Seite eine Ausnehmung auf, in die per Hand gegriffen und/oder ein Werkzeug gesetzt werden kann, um auf den Verschluss ein Drehmoment zu übertragen, ihn also durch Drehen in dem Rohrelement zu arretieren oder aus einer Arretierung zu lösen.

Bei einer bevorzugten Durchführung ist außenseitig an dem Rohrelement, vorzugsweise an einem Ende des Rohrelements, ein Aufhängungselement zur Befestigung der Durchführung beim Einbau in das Wand- oder Bodenelement vorgesehen. Vorzugsweise ist dieses Aufhängungselement als umlaufende, sich senkrecht zur Längsrichtung von dem Rohrelement weg erhebende Flanschplatte vorgesehen, besonders bevorzugt eben als an einem Ende des Rohrelements angeordnete Flanschplatte. Beim Einbau der Durchführung kann die endseitige Flanschplatte dann flächig an einer Schalung anliegen, die Durchführung kann durch Vernageln und/oder Verschrauben der Flanschplatte an der Schalung beim Vergießen befestigt sein.

In Längsrichtung gesehen hat das Aufhängungselement vorzugsweise eine polygonförmige Außenkontur, sodass es also mit entsprechend polygonförmigen Aufhängungselementen weiterer Durchführungen sich flächig ergänzend zusammenbaubar ist. Bevorzugt ist eine im Wesentlichen rechteckförmige, insbesondere quadratische, Außenkontur.

In bevorzugter Ausgestaltung weist das Aufhängungselement ein Verbindungselement auf, über welches die Durchführung mit einer weiteren Durchführung verbindbar ist. Dieses Verbindungselement ist vorzugsweise ein doppelt als ein erstes und ein dazu komplementäres zweites vorgesehenes Formschlusselement, sodass beim Zusammensetzen zweier Durchführungen das erste Formschlusselement der einen Durchführung einen Formschluss mit dem zweiten Formschlusselement der anderen Durchführung bildet, und umgekehrt. Die Formschlusselemente können nut- und federartig ineinandergreifen, vorzugsweise mit einer Hinterschneidung; das Zusammensetzen und Auseinandernehmen der Formschlusselemente erfolgt vorzugweise mit einer jeweiligen Bewegung senkrecht zur Längsrichtung.

Das Rohrelement der erfindungsgemäßen Durchführung kann auch mehrteilig aufgebaut sein, also aus mindestens zwei (in der Regel nicht mehr als vier) Rohrelementteilstücken, die vorzugsweise derart an- bzw. ineinandergesetzt sind, dass sich ein im Vergleich zu den einzelnen Teilstücken längeres Rohrelement ergibt. Zwei an- bzw. ineinandergesetzte Rohrelementteilstücke haben dann also gemeinsam eine in Längsrichtung genommene Länge, die größer als die jeweilige Länge eines jeden der beiden Rohrelementteilstücke ist. Ein mehrteiliges Rohrelement kann in seiner Länge dann so angepasst sein, dass es von der einen Seite des Wand- oder Bodenelements bis zur entgegengesetzten Seite reicht, sich also bspw. bei einem Einbau der Durchführung von einem Schalungselement bis zum gegenüberliegenden erstreckt.

Wenngleich ein Einbau derart, dass das Rohrelement von einer Seite des Wand- oder Bodenelements bis zur entgegengesetzten reicht, also das Wand- oder Bodenelement vollständig durchsetzt, bevorzugt ist, kann das Rohrelement im Allgemeinen auch nur einen Teilabschnitt der Durchgangsöffnung in dem Wand- oder Bodenelement begrenzen (deshalb "mit begrenzen"). Es kann nämlich bspw. auch ein Ende des Rohrelements innerhalb des Wand- oder Bodenelements angeordnet sein und ein ein Stück weit in dieses Ende eingeschobener Formteil-Stopfen, etwa aus einem Schaummaterial wie bspw. Polystyrolschaum, die übrige Durchgangsöffnung von diesem Ende des Rohrelements weg freihalten.

Im Falle des mehrteiligen Rohrelements ist ein eben beschriebenes Aufhängungselement dann vorzugsweise an einem endseitigen Rohrelementteilstück vorgesehen, vorzugsweise an dessen dem anschließenden Rohrelementteilstück abgewandten Ende (also endseitig des Rohrelements im Gesamten). Der Verschluss ist generell vorzugsweise endseitig des Rohrelements angeordnet, sitzt dann bspw. im eben genannten Fall an dem Ende des endseitigen Rohrelementteilstücks, an welchem auch das Aufhängungselement vorgesehen ist.

Der endseitig angeordnete Verschluss kann sich vorzugsweise zumindest ein Stück weit in das Rohrelement hinein erstrecken, etwa mit einem zylindrischen Abschnitt mit einer Arretierungsvorrichtung (vorzugeweise Bajonettarretierung). Vorzugsweise schließt ein sich senkrecht zur Längsrichtung erstreckender Abschnitt des Verschlusses bündig mit dem Ende des Rohrelements, weiter bevorzugt als sich im Wesentlichen (von vorstehend genannten Eingriffen für ein Werkzeug und dergleichen abgesehen) plane Platte. Der Verschluss liegt dann also bspw. entsprechend flächig an einem Schalungselement an, was einer Anlagerung von Vergussmaterial vorbeugt.

Mögliche Innendurchmesser des Rohrelements können z. B. bei mindestens 5 cm bzw. 7,5 cm und etwa bei höchstens 50 cm, 30 cm, bzw. 20 cm liegen. Das Rohrelement kann bspw. eine in Längsrichtung genommene Länge von mindestens 10 cm, 20 cm bzw. 30 cm haben, wobei mögliche Obergrenzen etwa bei höchstens 200 cm bzw. 150 cm liegen. Im Falle der Mehrteiligkeit kann ein Rohrelementteilstück bspw. eine Länge von mindestens 5 cm, 10 cm bzw. 15 cm haben und liegen mögliche Obergrenzen z. B. bei höchstens 100 cm, 75 cm bzw. 50 cm.

Im Allgemeinen kann das Rohrelement bspw. auch eine rechteckförmige Querschnittsform haben (bei senkrecht zur Längsrichtung liegender Schnittebene), bevorzugt ist jedoch eine kreisförmige. Innen- und Außendurchmesser ergeben sich dann also als Kreisdurchmesser; das Rohrelement ist von bspw. einem Aufhängungselement und einer Arretierungsvorrichtung für den Verschluss abgesehen um eine Rotationsachse rotationssymmetrisch, wobei die Rotationsachse parallel zur Längsrichtung liegt. Die Längsrichtung liegt im Falle eines Bodenelements vorzugsweise ausschließlich vertikal und im Falle eines Wandelements bevorzugt ausschließlich horizontal.

Die Erfindung betrifft auch die Verwendung einer vorliegend beschriebenen Durchführung zum Einbau in ein Wand- oder Bodenelement mittels eines fließfähigen Materials, welches dann erstarrt, vorzugsweise mittels Beton. Wenngleich im Allgemeinen auch ein Einbau der Durchführung in eine bereits bestehende Wand denkbar ist, bspw. durch Einsetzen und Umschäumen, wird das Wand- oder Bodenelement vorzugsweise im Zuge des Einbaus der Durchführung erst hergestellt, erfolgt der Einbau also beim Gießen des Wand- oder Bodenelements. Vorzugsweise richtet sich die Erfindung auf eine Durchführung für ein Wandelement, betrifft also auch die Verwendung ein solches.

Der Einbau der Durchführung erfolgt vorzugsweise derart, dass die Längsrichtung senkrecht zur Seitenfläche des Wand- oder Bodenelements liegt (vorzugsweise zu einer Wandfläche). Beim Vergießen umschließt das fließfähige Material das Rohrelement umlaufend, das Rohrelement begrenzt in seinem Inneren eine Durchgangsöffnung, durch welche dann nach dem Erstarren des fließfähigen Materials und bspw. Entfernen einer Schalung eine Leitung hindurchgeführt werden kann.

In bevorzugter Ausgestaltung wird im Anschluss an den Einbau der Durchführung ein Schutzrohr an das Rohrelement angeschlossen, wird dieses also in Längsrichtung mit einem Schutzrohr verlängert. In dem Schutzrohr kann dann ein Kabel erdreichseitig bis zu dem Wand- oder Bodenelement geführt werden und das Wand-Bodenelement dann durch die Durchführung durchsetzen. Verläuft ein solches Schutzrohr bspw. in hügeligem bzw. bergigem Gelände, können über seine Länge von einer Anschlussstelle bis zu dem Wand- oder Bodenelement mehrere Höhenmeter, jedenfalls auch in im zweistelligen Bereich, überbrückt werden. Läuft nun ein solches Schutzrohr voll Wasser, steht dieses mit einem der Wassersäule entsprechenden Druck an dem Verschluss an. Erfindungsgemäß ist vorteilhafterweise vor dem Entfernen des Verschlusses eine Kontrolle auf anstehendes Wasser möglich.

Ganz allgemein betrifft die Erfindung auch eine Verwendung einer vorliegend offenbarten Durchführung, wobei vor dem Entfernen des Verschlusses aus dem Rohrelement durch eine Sichtkontrolle geprüft wird, ob an der einen Seite des Verschlusses Wasser ansteht. Vorzugsweise erfolgt dies vor dem Hindurchführen einer Leitung, wobei der Verschluss besonders bevorzugt ein von Durchlassöffnungen freier Verschluss (Blindverschluss) ist.

Im Folgenden wird die Erfindung anhand eines Ausführungsbeispiels näher erläutert, wobei auch weiterhin nicht im Einzelnen zwischen den unterschiedlichen Anspruchskategorien unterschieden wird und die Merkmale im Rahmen der nebengeordneten Ansprüche auch in einer anderen Kombinationen erfindungswesentlich sein können.
- Fig. 1: zeigt eine erfindungsgemäße Durchführung mit einem transparenten Verschluss in einer Explosionsdarstellung.
- Fig. 2: zeigt die erfindungsgemäße Durchführung mit an dem Verschluss anstehendem Wasser.

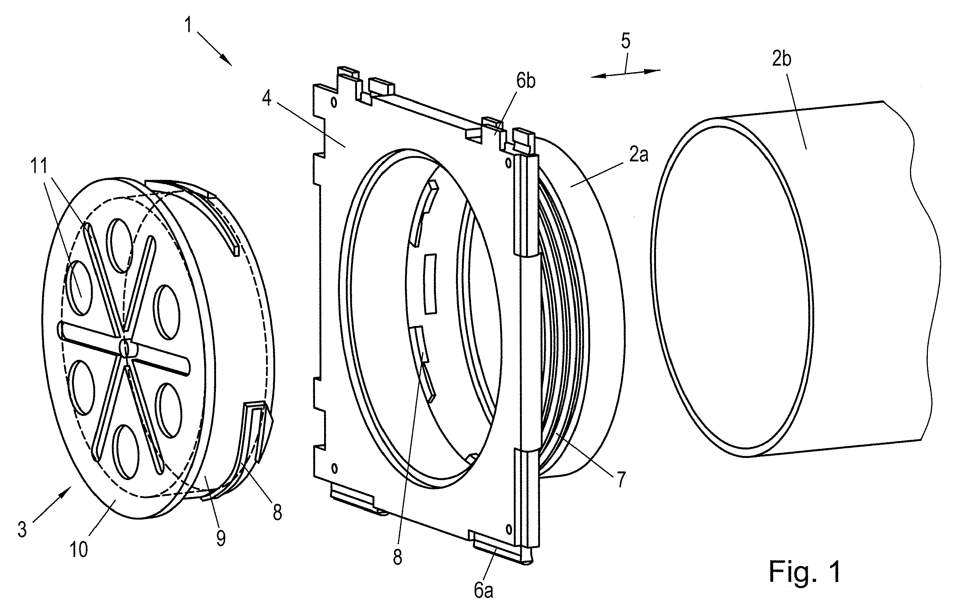

Figur 1 zeigt eine erfindungsgemäße Durchführung 1 mit einem Rohrelement 2 und einem dieses im zusammengesetzten Zustand verschließenden Verschluss 3 in einer Explosionsdarstellung. Das Rohrelement 2 ist vorliegend aus zwei Rohrelementteilstücken 2a, b aufgebaut, wobei das Rohrelementteilstück 2b in das endseitige Rohrelementteilstück 2a eingeschoben wird und dieses bis zur entgegensetzten Seite des (nicht gezeigten) Wandelements hin verlängert.

Endseitig an dem Rohrelement 2 (und damit an dem endseitigen Rohrelementteilstück 2a) ist eine Flanschplatte 4 angeformt, welche in Längsrichtung 5 gesehen eine quadratische Außenform hat. An den Ecken der Flanschplatte 4 sind erste 6a und zweite Formschlusselemente 6b vorgesehen, über welche die Durchführung 1 mit einer weiteren, baugleichen Durchführung verbindbar ist, wobei sich die Flanschplatten 4 flächig ergänzen. Dazu werden die federartigen, ersten Formschlusselemente 6a in die nutartigen, zweiten Formschlusselemente 6b eingeschoben und verrasten darin, sind also mit einer Hinterschneidung gehalten.

Das endseitige Rohrelementteilstück 2a und die Flanschplatte 4 mit den Formschlusselementen 6a, b sind monolithisch geformt aus Acryl-Butadien-Styrol (ABS), und zwar durch Spritzguss. Außenseitig an das Rohrelementteilstück 2a ist in einem Zwei-Komponenten-Spritzgussverfahren eine umlaufende Stegdichtung 7 angespritzt, die aus drei sich jeweils von der Außenwand des Rohrelementteilstücks 2a senkrecht zur Längsrichtung 5 weg erhebenden, zueinander in Längsrichtung 5 beabstandeten Stegen aufgebaut ist. Die Stegdichtung 7 wird beim Einbau der Durchführung in ein Wandelement von dem Beton umschlossen und verlängert bzw. unterbindet Kriechwege entlang der Außenseite des Rohrelements 2.

Der Verschluss 3 der erfindungsgemäßen Durchführung 1 ist transparent aus Polycarbonat vorgesehen, ebenfalls als Spritzgussteil. Die Transparenz ist in der Figur schematisch angedeutet. Der Verschluss 3 wird vor dem Einbau der Durchführung 1, also vor dem Gießen des Wandelements, in das Rohrelement 2 gesetzt und durch Drehen arretiert, wozu außenseitig an einem sich in Längsrichtung 5 erstreckenden, zylindrischen Abschnitt 9 des Verschlusses 3 und innenseitig in dem Rohrelement 2 eine Bajonett-Arretierung 8 vorgesehen ist. Beim Vergießen liegt der Verschluss mit einer sich senkrecht zur Längsrichtung 5 erstreckenden Stirnfläche 10 an der Schalung an. Wird nach dem Härten des Betons die Schalung entfernt, kann der Verschluss 3 aus der übrigen Durchführung 1 genommen werden. Dazu wird durch Drehen die Bajonett-Arretierung 8 gelöst. Zum Aufbringen des Drehmoments sind in der Stirnseite 10 unterschiedliche Ausnehmungen 11 vorgesehen sind, in die ein Monteur mit der Hand oder einem Werkzeug greifen kann.

In der Praxis wird der Verschluss 3 vielfach nach dem Einbau der Durchführung 1 noch über einen längeren Zeitraum in dem Rohrelement 2 verbleiben. Dabei ist an das entgegengesetzte Ende der Durchführung jedoch bereits ein (vorliegend nicht gezeigtes) Schutzrohr angeschlossen werden, auch weil eine etwaige Erdaushebungen erdreichseitig dann nach dem Herstellen des Wandelements in der Regel bald wieder aufgefüllt wird. Das Schutzrohr wird also blindvorverlegt, und es kann dann bei Bedarf später eine Leitung von einer erdreichseitigen Anschlussstelle hindurchgefädelt werden. Hat sich nun zwischenzeitlich Wasser in dem Schutzrohr gesammelt, ist dies aufgrund des erfindungsgemäß transparent ausgebildeten Verschlusses 3 vor dessen Entfernen visuell erkennbar. Ein Monteur kann also durch eine einfache Sichtkontrolle prüfen, ob Wasser an dem Verschluss 3 ansteht und das Schutzrohr bei Bedarf bspw. von der erdreichseitigen Anschlussstelle her vor dem Entfernen des Verschlusses 3 leerpumpen.

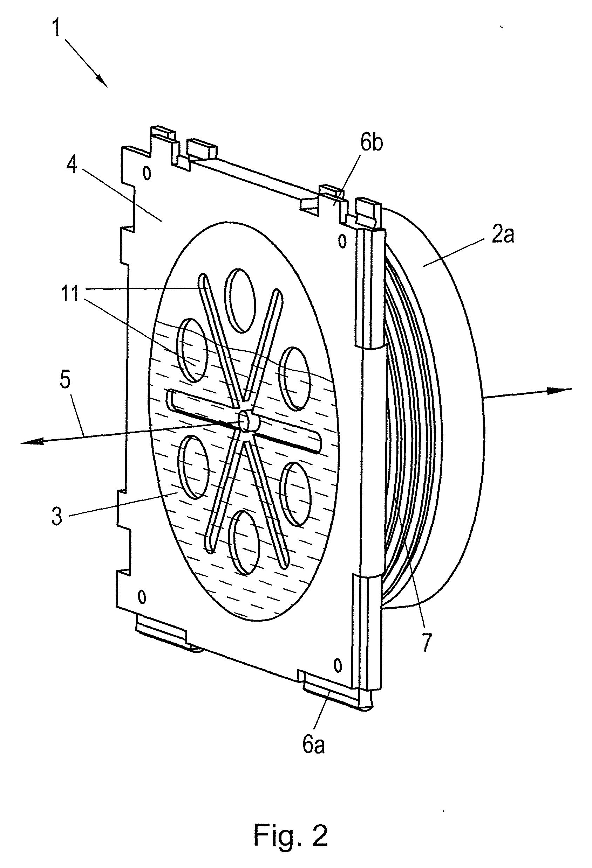

Figur 2 illustriert die Situation eines zum Teil mit Wasser gefüllten Rohrelements 2 schematisch. Der Verschluss 3 ist in das Rohrelement 2 gesetzt, und es steht erdreichseitig des Verschlusses 3 Wasser an. Dies ist an der entgegengesetzten Seite des transparenten Verschlusses 3 visuell erkennbar. Figur 2 illustriert einen Blick auf die Durchführung 1, wie ihn dann im Prinzip auch ein Monteur hat, also einen Blick auf die (nicht gezeigte) Innenseite des Wandelements, welche der erdreichseitigen Außenseite entgegengesetzt liegt.

## Patentansprüche

1. Durchführung (1) zum Einbau in ein Wand- oder Bodenelement, mit
einem Rohrelement (2), das dazu ausgelegt ist, eine Durchgangsöffnung zwischen zwei entgegengesetzten Seiten des Wand- oder Bodenelements mit zu begrenzen, durch welche Durchgangsöffnung eine Leitung in einer Längsrichtung (5) des Rohrelements (2) durch das Wand- oder Bodenelement hindurchführbar ist, und
einem das Rohrelement (2) hinsichtlich der Längsrichtung (5) verschließenden Verschluss (3), der aus dem Rohrelement (2) entfernbar ist,
**dadurch gekennzeichnet, dass**
der Verschluss (3) jedenfalls bereichsweise aus einem zumindest transluzenten Material gebildet ist, sodass vor dem Entfernen des Verschlusses (3) an einer Seite des Verschlusses (3) anstehendes Wasser an der entgegengesetzten Seite des Verschlusses (3) visuell erkennbar ist.

2. Durchführung (1) nach Anspruch 1, bei welcher das zumindest transluzente Material transparent ist.

3. Durchführung (1) nach Anspruch 1 oder 2, bei welcher sich der Bereich aus dem zumindest transluzenten Material senkrecht zu der Längsrichtung (5) über mindestens 1/3 eines Innendurchmessers erstreckt, welchen das Rohrelement (2) senkrecht zu der Längsrichtung (5) genommen hat.

4. Durchführung (1) nach einem der vorstehenden Ansprüche, bei welcher der Verschluss (3) im Gesamten aus dem zumindest transluzenten Material gebildet ist.

5. Durchführung (1) nach einem der vorstehenden Ansprüche, bei welcher das zumindest transluzente Material eines von Acrylglas und Polycarbonat ist.

6. Durchführung (1) nach einem der vorstehenden Ansprüche, bei welcher der Verschluss (3) zerstörungsfrei aus dem Rohrelement (2) entfernbar und für ein erneutes Verschließen des Rohrelements (2) wieder einsetzbar ist.

7. Durchführung (1) nach einem der vorstehenden Ansprüche, bei welcher der Verschluss (3) vollständig umlaufend bis an eine Innenwand des Rohrelements (2) reicht.

8. Durchführung (1) nach einem der vorstehenden Ansprüche, bei welcher der Verschluss (3) das Rohrelement (2) senkrecht zu der Längsrichtung (5) vollständig und unterbrechungsfrei ausfüllt.

9. Durchführung (1) nach einem der vorstehenden Ansprüche, bei welcher außenseitig an dem Rohrelement (2), vorzugsweise an einem Ende davon, ein Aufhängungselement (4) zur Befestigung der Durchführung (1) beim Einbau in das Wand- oder Bodenelement vorgesehen ist, vorzugsweise eine umlaufende Flanschplatte.

10. Durchführung (1) nach Anspruch 9, bei welcher das Aufhängungselement (4) in der Längsrichtung (5) gesehen eine polygonförmige Außenkontur hat und mit entsprechend polygonförmigen Aufhängungselementen (4) weiterer Durchführungen (1) sich flächig ergänzend zusammenbaubar ist.

11. Durchführung (1) nach Anspruch 9 oder 10, bei welcher das Aufhängungselement (4) ein Verbindungselement (6) aufweist, über welches die Durchführung (1) mit einer weiteren Durchführung (1) verbindbar ist und das doppelt als ein erstes Formschlusselement (6a) und ein zweites Formschlusselement (6b) vorgesehen ist, welche Formschlusselemente (6a,b) solchermaßen komplementär ausgelegt sind, dass das erste Formschlusselement (6a) einen Formschluss mit dem zweiten Formschlusselement (6b) der weiteren Durchführung (1) bilden kann.

12. Verwendung einer Durchführung (1) nach einem der vorstehenden Ansprüche zum Einbau in ein Wand- oder Bodenelement mittels eines fließfähigen Materials, welches dann erstarrt.

13. Verwendung nach Anspruch 12, bei welcher im Anschluss an den Einbau in das Wand- oder Bodenelement ein Schutzrohr an das Rohrelement (2) in der Längsrichtung (5) angeschlossen wird.

14. Verwendung nach Anspruch 12 oder 13, bei welcher durch das Rohrelement (2) eine Leitung hindurchgeführt und dazu der Verschluss aus dem Rohrelement (2) entfernt wird, wobei zuvor durch eine Sichtkontrolle geprüft wird, ob an der einen Seite des Verschlusses Wasser ansteht.

## Claims

1. A duct (1) for an insertion into a wall or floor element, having
a tube element (2) adapted for defining a through-opening between two opposed sides of said wall or floor element, at least in a section, wherein a line can be led through said through-opening in a length direction (5) of said tube element (2) and through said wall or floor element thus, and
a closure (3) closing said tube element with respect to said length direction (5), which closure can be removed from said tube element (2), **characterized in that**
said closure (3) is provided at least in a region of a material being at least translucent so that water being in contact with the closure on one side thereof is visually recognizable on the opposite side thereof prior to the removal of said closure (3).

2. The duct (1) according to claim 1, wherein said material being at least translucent is transparent.

3. The duct (1) according to claim 1 or 2, wherein said region made of said material being at least translucent extends in a direction perpendicular to
said length direction (5) over at least 1/3 of an inner diameter of said tube element (2), said inner diameter taken perpendicularly to said length direction (5).

4. The duct (1) according to one of the preceding claims, wherein said closure (3) is made as a whole of said material being at least translucent.

5. The duct (1) according to one of the preceding claims, wherein said material being at least translucent is one of acrylic glass and polycarbonate.

6. The duct (1) according to one of the preceding claims, wherein said closure (3) can be removed from said tube element (2) in a manner non-destructive and can be reinserted for closing said tube element (2) again.

7. The duct (1) according to one of the preceding claims, wherein said closure (3) reaches up to an inner wall of said tube element (2) over the whole circumference.

8. The duct (1) according to one of the preceding claims, wherein said closure (3) of said tube element (2) fills up said tube element (2) perpendicularly to
said length direction (5) completely and continuously.

9. The duct (1) according to one of the preceding claims, wherein on the outside at said tube element (2), preferably at an end thereof, a mounting element (4) for mounting said duct during said insertion into said wall or floor element is provided, preferably a circumferential flange plate.

10. The duct (1) according to claim 9, wherein said mounting element (4) has a polygonal outer shape seen in said length direction (5) and can be assembled with correspondingly polygonal mounting elements (4) of further ducts (1) in a manner complementing each other to an area.

11. The duct (1) according to claim 9 or 10, wherein said mounting element (4) comprises a connecting element (6), the duct (1) being connectable to a further duct (1) by said connecting element, said connecting element being provided twofoldly as a first form-fit element (6a) and a second form-fit element (6b), said form-fit elements (6a,b) being complementary to each other such that said first form-fit element (6a) can form a form-fit with said second form-fit element (6b) of said further duct (1).

12. A use of a duct (1) according to one of the preceding claims for an insertion into a wall or floor element by a pourable material hardening then.

13. The use according to claim 12, wherein a protective tube is connected to
said tube element (2) in said length direction (5) subsequently to said insertion into said wall or floor element.

14. The use according to claim 12 or 13, wherein a line is led through said tube element (2), said closure being removed from said tube element (2) for that purpose, prior thereto a visual action being conducted for checking whether water contacts said closure on the one side.

## Revendications

1. Passage (1) destiné à être encastré dans un élément de paroi ou de sol, comportant:
un élément de tuyau (2) conçu pour délimiter une ouverture de passage entre deux côtés opposés de l'élément de paroi ou de sol, ladite ouverture de passage servant au passage d'une conduite dans un sens longitudinal (5) de l'élément de tuyau (2) à travers l'élément de paroi ou de sol, et
un dispositif de fermeture (3) qui ferme l'élément de tuyau (2) eu égard au sens longitudinal (5) et est amovible vis-à-vis de l'élément de tuyau (2),
**caractérisé en ce que**
le dispositif de fermeture (3) est conçu, dans tous les cas sur une certaine région, dans un matériau au moins translucide de manière à permettre, sur un côté du dispositif de fermeture (3), la visualisation d'eau présente sur le côté opposé du dispositif de fermeture (3) avant le retrait dudit dispositif de fermeture (3).

2. Passage (1) selon la revendication 1, dans lequel le matériau au moins translucide est transparent.

3. Passage (1) selon la revendication 1 ou 2, dans lequel la région conçue en matériau au moins translucide s'étend perpendiculairement au sens longitudinal (5) sur au moins 1/3 du diamètre intérieur occupé par l'élément de tuyau (2) perpendiculairement au sens longitudinal (5).

4. Passage (1) selon l'une quelconque des revendications précédentes, dans lequel le dispositif de fermeture (3) est totalement conçu en matériau au moins translucide.

5. Passage (1) selon l'une quelconque des revendications précédentes, dans lequel le matériau au moins translucide est le verre acrylique ou le polycarbonate.

6. Passage (1) selon l'une quelconque des revendications précédentes, dans lequel le dispositif de fermeture (3) peut être retiré sans endommagement hors de l'élément de tuyau (2) et peut être réutilisé pour une nouvelle fermeture de l'élément de tuyau (2).

7. Passage (1) selon l'une quelconque des revendications précédentes, dans lequel le dispositif de fermeture (3) est en contact, sur la totalité de sa circonférence, avec une paroi intérieure de l'élément de tuyau (2).

8. Passage (1) selon l'une quelconque des revendications précédentes, dans lequel le dispositif de fermeture (3) remplit totalement et sans interruption l'élément de tuyau (2) perpendiculairement au sens longitudinal (5).

9. Passage (1) selon l'une quelconque des revendications précédentes, dans lequel il est prévu, sur l'extérieur de l'élément de tuyau (2), de préférence à une de ses extrémités, un élément d'accrochage (4), de préférence une plaque à bride tournante, permettant la fixation du passage (1) lors de l'encastrement dans l'élément de paroi ou de sol.

10. Passage (1) selon la revendication 9, dans lequel l'élément d'accrochage (4) présente un contour extérieur polygonal, vu dans le sens longitudinal (5), et peut être assemblé à des éléments d'accrochage (4) de forme polygonale correspondante d'autres passages (1) en se complétant en plan.

11. Passage (1) selon la revendication 9 ou 10, dans lequel l'élément d'accrochage (4) présente un élément de raccord (6) qui permet de raccorder le passage (1) à un autre passage (1) en étant prévu en double sous la forme d'un premier élément à complémentarité de forme (6a) et d'un second élément à complémentarité de forme (6b), lesdits éléments à complémentarité de forme (6a,b) étant conçus pour être complémentaires de manière que le premier élément à complémentarité de forme (6a) puisse constituer une complémentarité de forme avec le second élément à complémentarité de forme (6b) de l'autre passage (1).

12. Utilisation d'un passage (1) selon l'une quelconque des revendications précédentes à encastrer dans un élément de paroi ou de sol au moyen d'un matériau coulable durcissant par la suite.

13. Utilisation selon la revendication 12, dans lequel, suite à l'encastrement dans l'élément de paroi ou de sol, un tuyau de protection est raccordé à l'élément de tuyau (2) dans le sens longitudinal (5).

14. Utilisation selon la revendication 12 ou 13, dans lequel une conduite est passée dans l'élément de tuyau (2), après que le dispositif de fermeture a été retiré de l'élément de tuyau (2), en contrôlant auparavant visuellement si de l'eau est présente sur un côté du dispositif de fermeture.
